# EUROPÄISCHE PATENTSCHRIFT

(11) **EP 2 546 124 B1**
(45) Veröffentlichungstag und Bekanntmachung des Hinweises auf die Patenterteilung: **22.08.2018**
(21) Anmeldenummer: 12170459.7
(22) Anmeldetag: 01.06.2012
(51) Int. Cl.: B62D 27/02, F16B 11/00

(54) **Baugruppe und Verfahren zum Verbinden von Bauteilen mit unterschiedlichen Wärmeausdehnungskoeffizienten**
Sub-assembly and method for connecting components with different thermal expansion coefficients
Module de composants avec différents coefficients de dilatation thermique et leur procédé de liaison

(30) Priorität: 12.07.2011 DE 102011079021
(43) Veröffentlichungstag der Anmeldung: 16.01.2013
(73) Patentinhaber: Bayerische Motoren Werke Aktiengesellschaft, 80809 München (DE)
(72) Erfinder: Hammer, Maik, 84174 Eching (DE); van Niekerk, Johann, 80993 München (DE); Brauch, Michael, 85598 Baldham (DE)

(56) Entgegenhaltungen:
- WO-A1-97/14602
- WO-A1-2010/063413
- DE-A1- 10 203 829

## Beschreibung

Die Erfindung betrifft eine Baugruppe umfassend mindestens zwei Bauteile, die aus unterschiedlichen Werkstoffen ausgebildet sind, mit einem ersten Bauteil, das einen ersten Wärmeausdehnungskoeffizient aufweist und einem zweiten Bauteil, das einen zweiten Wärmeausdehnungskoeffizient, der von dem ersten Wärmeausdehnungskoeffizient verschieden ist, aufweist. Darüber hinaus betrifft die Erfindung auch ein Verfahren zum Verbinden von Bauteilen mit unterschiedlichen Wärmeausdehnungskoeffizienten.

Die Mischbauweise, bei der verschiedene Materialien bzw. Werkstoffe miteinander verbunden werden, gewinnt für aktuelle und kommende Fahrzeugkonzepte unter dem Blickwinkel von CO²-Reduzierungen und der damit verbundenen Notwendigkeit des Leichtbaus zunehmend an Bedeutung. Unter Materialmischbau ist dabei die Verbindung von mindestens zwei Bauteilen unterschiedlicher Werkstoffe und unterschiedlicher Wärmeausdehnungskoeffizienten zu verstehen. Zum Fügen solcher Bauteile ist das Kleben als Verbindungstechnik von zentraler Bedeutung. Bei heutigen Klebeverbindungen werden die miteinander zu verbindenden Bauteile in einem vorbestimmten Abstand, dem sogenannten Klebespalt, zueinander ausgerichtet und verklebt. Die Bauteile werden beispielsweise mittels Stanznieten oder Schweißpunkten fixiert und durchlaufen anschließend Wärme /Trocknerprozesse der Lackiererei, in denen der verwendete Klebstoff aus¬härtet.

Werden Bauteile mit verschiedenen Längenausdehnungskoeffizienten mit¬einander fest verbunden und durchlaufen dann Wärme-/Trocknerprozesse der Lackiererei, so können an den einzelnen Bauteilen bzw. den sogenannten Fügepartnern, den Fügeelementen und der Klebeschicht lokal hohe Spannungen auftreten, die zur Schädigung des Fügeelements, d.h. der Stanz¬nieten oder Schweißpunkte, der Bauteile bzw. der Fügepartner und der Klebeschicht führen können. Die Höhe der auftretenden Spannungen ist da¬bei abhängig von der Gesamtverbundlänge sowie deren Geometrie. Die ent¬tehenden Beschädigungen verändern die Eigenschaften, beispielsweise die Steifigkeit und können bis hin zum Versagen des Bauteils führen.

Aus der DE 102 03 829 A1 ist eine Befestigungsanordnung nach dem Oberbegriff von dem Anspruch 1 bekannt, für einen aus Kunststoff bestehenden Fahrzeugkörper eines Kraftfahrzeugs, die eine metallische Abstützung, eine Kunststoffplatte mit einer Öffnung und ein Befestigungsteil umfasst.

Die WO 97/14602 A1 zeigt eine Fahrzeugkarosserie aus Spritzgusskunststoff, die an einen Stahlrahmen angeklebt ist mit Hilfe einer adhesiven Schicht. Die adhesive Schicht ist in konzentrischen Kreismustern ausgebildet, um eine Ausdehnung der Fahrzeugstruktur relativ zum Rahmen zu ermöglichen und befindet sich zwischen der Fahrzeugstruktur und dem Rahmen.

Ausgehend von diesem Stand der Technik macht es sich die vorliegende Erfindung zur Aufgabe, eine Bauteilgruppe bzw. ein Verbundbauteil sowie ein vereinfachtes Verfahren anzugeben, mit dem die Nachteile des Standes der Technik überwunden werden. Ferner ist es Aufgabe der Erfindung, ein Verbund¬bauteil sowie ein Verfahren zur Herstellung des Verbundbauteils anzugeben, bei dem eine zuverlässige und schadfreie Verklebung der einzelnen Bauteile erzielt wird.

Diese Aufgabe wird durch eine Baugruppe bzw. ein Verfahren mit den Merk¬malen der unabhängigen Ansprüche gelöst. Die abhängigen Ansprüche stellen vorteilhafte Ausführungen der Erfindung dar.

Zur Lösung dieser Aufgabe schlägt die Erfindung eine Baugruppe vor, die mindestens zwei Bauteile, die aus unterschiedlichen Werkstoffen ausgebildet sind, umfasst. Die Bauteilgruppe umfasst ein erstes Bauteil, das einen ersten Wärmeausdehnungskoeffizient aufweist und ein zweites Bauteil, das einen zweiten Wärmeausdehnungskoeffizient, der von dem ersten Wärme¬ausdehnungskoeffizient dem Wert nach verschieden ist. Die Bauteile können zumindest abschnittsweise über einen Klebstoff miteinander in Verbindung stehen. Darüber hinaus können die Bauteile zusätzlich über ein Festlager und mindestens ein Loslager miteinander verbunden sind. Im Sinne der Erfindung ist ein Festlager als eine Fixierung aufzufassen, die alle drei Translationsfreiheitsgrade eines Bauteiles in Relation zu einem zweiten Bauteil eliminiert. Mit anderen Worten wird durch ein Festlager ein erstes Bauteil an einem zweiten Bauteil derart fixiert, dass keine translatorischen Bewegungen zueinander mehr möglich sind. Rotatorische Bewegungen sind weiterhin möglich. Im Sinne der Erfindung eliminiert ein Loslager ein oder zwei Translationsfreiheitsgrade zwischen zwei Bauteilen und lässt folglich Relativbewegungen in dem verbliebenen Translationsfreiheitsgrad bzw. den verbliebenen anderen Translationsrichtungen zu. Darüber hinaus lässt ein Loslager auch Drehbewegungen der zwei Bauteile zueinander zu. Im Sinne der Erfindung ist der Wärmeausdehnungskoeffizient insbesondere als der thermische Längenausdehnungskoeffizient α zu verstehen. Der thermische Längenausdehnungskoeffizient ist eine Proportionalitätskonstante zwischen einer relativen Längenänderung eines Festkörpers bezogen auf seine Gesamtlänge im Ausgangszustand, die durch eine Temperaturänderung bedingt wird. Der thermische Längenausdehnungskoeffizient ist eine materialspezifische Größe und hängt somit von dem verwendeten Werkstoff ab. Darüber hinaus kann im Sinne der Erfindung der Wärmeausdehnungskoeffizient auch als thermischer Raumausdehnungskoeffizient γ aufgefasst werden.

Durch Vorsehen eines Festlagers werden die Bauteile an einem Punkt ortsfest zueinander fixiert und können sich bei Wärmeausdehnung jedoch zueinander unterschiedlich ausdehnen durch Vorsehen eines Loslagers. Dadurch können Spannungen bzw. Verwerfungen der einzelnen Bauteile zwischen den Lagerpunkten vermieden werden.

Darüber hinaus ist das Festlager in einer Längsrichtung der Bauteilgruppe im Wesentlichen mittig angeordnet. Eine solche Fixierung der Bauteile bietet den Vorteil, dass die Gesamtlängenausdehnung an den Loslagern, die in Randbereichen des Verbundbauteils vorgesehen sind, halbiert werden kann, verglichen mit einer Lageranordnung, bei der das Festlager an einem Endbereich des Verbundbauteils und das Loslager an einem gegenüberliegenden Endbereich des Verbundbauteils angeordnet ist.

Durch Vorsehen von Loslagern an zumindest einem der Fügepartner und durch den Einsatz von nicht starr fixierender Verbindungstechnik, wie z.B. Blindniet oder Grobgewindebolzen mit Kunststoffclips, die neben der geometrischen Lage auch die Bauteilgruppe umfassend das erste Bauteil, das zweite Bauteil sowie den Klebstoff fixieren, wird ermöglicht, dass die Relativverschiebung der Fügepartner, d.h. des ersten und zweiten Bauteils aufgrund der unterschiedlichen Längenausdehnungskoeffizienten im Trocknungsdurchlauf zugelassen wird bis der Klebstoff vernetzt bzw. ausgehärtet ist. Die Verbindungseigenschaften werden durch die Verklebung gewährleistet. Mit anderen Worten, die notwendige unterschiedliche Längenverschiebung zwischen den Bauteilen wird durch geeignete technische Maßnahmen, nämlich sogenannte schwimmende Fixierung realisiert. Das erste Bauteil und das zweite Bauteil sind durch einzelne Klemmelemente, d.h. ein oder mehrere Festlager, in der Endgeometrie fixiert. Weitere Klemmelemente, d.h. Loslager, sind so ausgelegt, dass die Bauteile bei prozessbedingter Ausdehnung in der prozessrelevanten Richtung, im Allgemeinen in Längsrichtung des Verbundbauteils beweglich sind.

In einer ersten bekannten Ausführungsform kann ein zwischen den Bauteilen vorgesehener Klebespalt eine im Wesentlichen gleichmäßige Dicke aufweisen. Das erste Bauteil weist dabei eine erste Klebeoberfläche auf und das zweite Bauteil eine zweite Klebeoberfläche auf. Das erste und das zweite Bauteil sind so zueinander ausgerichtet, dass deren Klebeoberflächen sich in einem vorbestimmten Abstand gegenüberstehen und dazwischen den Klebespalt bilden, in dem der Klebstoff aufgebracht ist. Durch einen gleichmäßig ausgelegten Klebespalt, d.h. einen Klebespalt beim dem die Dicke über die Länge des Verbundbauteils nahezu Konstant bleibt, wird der Längenunterscheid im Prozess kompensiert, so dass keine Enthaftungen auftreten. Der vorbestimmte Abstand der zwei Bauteile zueinander bzw. die Dicke des Klebespaltes wird auf einen maximal zulässigen Scherwinkel dimensioniert. Der maximale Schwerwinkel ergibt sich aus der maximal auftretenden Längendifferenz, die wiederum durch die im Prozess auftretenden Temperaturunterschiede bedingt sind.

Erfindungsgemäß ist die Dicke eines zwischen den Bauteilen vorgesehenen Klebespalts nicht gleichmäßig, sondern nimmt im Wesentlichen von der Position des Festlagers zu der Position der Loslager und darüber hinaus zu den Randbereichen der Bauteilgruppe zu. Erfindungsgemäß ist in dieser Ausführungsform der Klebespalt als sogenannter V-Klebespalt ausgelegt. Die Klebespaltdicke wird dabei minimal in Abhängigkeit der Längenausdehnung ausgelegt. Die Längenausdehnung des Bauteils nimmt mit zunehmendem Abstand von der Stelle, an der das Festlager vorgesehen ist, zu. Mit zunehmendem Abstand von der Fixierstelle nimmt auch die Dicke des Klebespaltes zu. In der erfindungsgemäßen Ausführungsform ist folglich die Dicke des Klebespaltes eine Funktion des Abstandes von dem Festlager. Der sich ergebende, lokale Scherwinkel ist dabei stets kleiner als der maximal zulässige Scherwinkel. Dieser ist abhängig vom Klebstoff, dem Bauteilmaterial, der Bauteillänge, der Oberfläche des Bauteils und von dem Härteprozess. Die Verwendung eines V-Klebespalts bietet somit Vorteile dahingehend, dass an jeder Stelle eine prozesstechnisch minimale Klebespaltauslegung erreicht werden kann und dadurch möglichst wenig Klebstoff eingesetzt wird, wobei gleichzeitig prozesstechnische Stabilität in punkto Effizienz und Leichtbau gewahrt wird. Folglich ergibt sich eine scherwinkelabhängige, mit dem Abstand zum Festlager zunehmende, definierte minimale Klebespaltdicke.

Darüber hinaus kann das Festlager und/oder das Loslager als Fügeelement, insbesondere als Niet, Gewindebolzen und/oder Kunststoffclips ausgebildet sein.

In einem weiteren Aspekt betrifft die Erfindung ein Verfahren zum Verbinden von Bauteilen mit unterschiedlichen Wärmeausdehnungskoeffizienten, mit den Schritten: Verbinden zweier Bauteile mit einem Klebstoff, Anordnung eines die beiden Bauteile verbindenden Festlagers, Anordnung mindestens eines die beiden Bauteile verbindenden Loslager und Aushärten des Klebstoffs.

Darüber hinaus kann die Anordnung des Festlagers im Wesentlichen mittig in einer Längsrichtung der Bauteilgruppe erfolgen.

In einer ersten bekannten Ausführungsform kann zum Verbinden der Bauteile mit dem Klebstoff ein Klebespalt mit einer im Wesentlichen gleichmäßigen Dicke erzeugt werden. Bei dem erfindungsgemäßen Verfahren wird ein Klebespalt mit einer Dicke erzeugt, die von dem Festlager zu dem Loslager zunimmt.

In beiden ausführungsformen können die Bauteile zuerst mittels Festlager und Loslager miteinander verbunden werden und anschließend die Aushärtung des Klebstoffs durch Beaufschlagung mit Wärme erfolgen. Zusammenfassend sollen nachfolgend kurz die Vorteile der Erfindung aufgezählt werden. Durch ein erfindungsgemäßes Verbundteil bzw. eine erfindungsgemäße Baugruppe und dem erfindungsgemäßen Verfahren können Beschädigungen an den Fügeelementen bzw. an den Fügepunkten vermieden werden. Darüber hinaus können auch Schädigungen des Werkstoffs bzw. des ersten und/oder Bauteils vermieden werden. Zudem erfolgt bei Einhaltung der notwendigen Klebstoffdicke auch keine Schädigung an der Klebung. Ferner kann erfindungsgemäß die Fügeverbindung Klebstoff und somit kostenminimal ausgelegt werden.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzelnen und in anderen Kombinationen betrachten, um weitere Ausführungsformen zu bilden, die an entsprechende Anwendungen der Erfindung angepasst sind.

Es zeigen in schematischer Darstellung:
- Figur 1: ein bekanntes Verbundbauteil,
- Figur 2: eine seitliche Schnittansicht eines bekannten Verbundbauteils entlang der Schnittlinie A-A aus Figur 3,
- Figur 3: eine Draufsicht auf ein erstes Bauteil einer Bauteilgruppe die in Fig. 2 abgebildet ist,
- Figur 4: eine weitere Draufsicht auf ein erstes Bauteil einer ähnlichen Bauteilgruppe und
- Figur 5: eine seitliche Schnittansicht durch eine erfindungsgemäße Bauteilgruppe gemäß einer Ausführungsform der Erfindung.

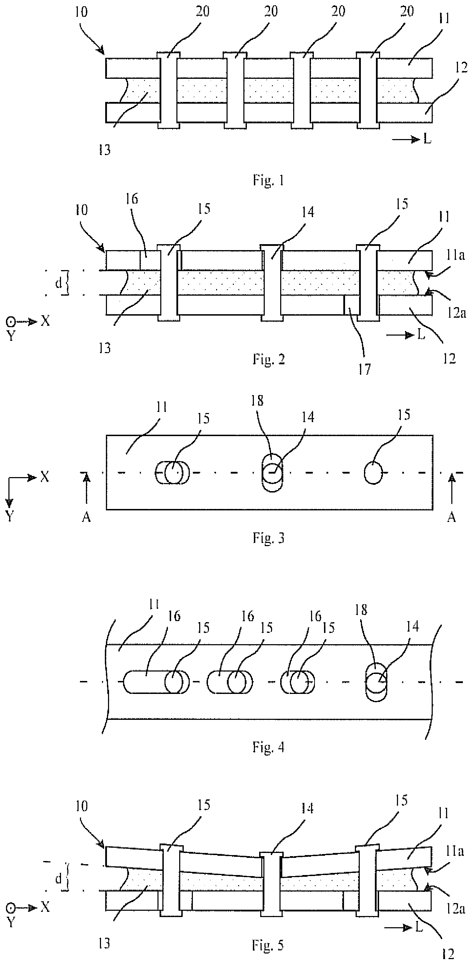

Im Folgenden soll zunächst anhand von Figur 1 das auftretende Problem bei der Verbindung von Werkstoffen mit unterschiedlichen Ausdehnungskoeffizienten erläutert werden. Das Verbundbauteil 10 bzw. die Bauteilgruppe 10 gemäß Figur 1 weist ein erstes Bauteil 11, ein zweites Bauteil 12 und einen dazwischen angeordneten Klebstoff 13 auf. Die Bauteile 11, 12 sind zusätzlich über Fügeelemente 20, beispielsweise Schrauben, Nieten (oder ähnliches) miteinander verbunden. Das in Figur 1 untere, zweite Bauteil 12 weist einen Wärmeausdehnungskoeffizient auf, der einen höheren Wert hat als der Wert des Wärmeausdehnungskoeffizients des ersten, oberen Bauteils 11, d.h. bei Beaufschlagung der Bauteilgruppe 10 mit Wärme dehnt sich das zweite Bauteil 12 in Richtung des Pfeils L aus. Natürlich dehnt sich das zweite Bauteil 12 in Figur 1 rechtseitig wie auch linkseitig aus. Das erste Bauteil 11 dehnt sich weniger stark aus, so dass Spannungen durch die Fügeelemente 20 in den Bauteilen 11, 12 entstehen, die zu Beschädigungen der Bauteile 11, 12, der Klebeverbindung oder der Fügeelemente 20 führen können.

Eine erste Ausführungsform eines bekannten Verbundbauteils ist zum besseren Verständnis der Erfindung in der Figur 2 dargestellt, wobei gleiche Bezugszeichen auch gleiche Elemente wie in Figur 1 bezeichnen. Das erste Bauteil 11 weist eine erste Oberfläche 11a, die als Klebeoberfläche bezeichnet wird, auf. Das zweite Bauteil 12 weist ebenfalls eine Oberfläche 12a, die als Klebeoberfläche bezeichnet wird, auf. Die Bauteile 11, 12 sind so zueinander positioniert, dass die Klebeoberflächen 11a, 12a einander zugewandt sind und sich gegenüberstehen. Diese Klebeoberflächen 11a, 12a bilden einen Klebespalt aus, der eine vorbestimmte Dicke d aufweist und in dem ein Klebstoff 13 eingebracht ist. Die einzelnen Bauteile sind darüber hinaus über ein Festlager 14 und zwei Loslager 15 miteinander verbunden. In der linken Hälfte der Figur 2 ist im ersten Bauteil 11 eine erste Ausnehmung 16 vorgesehen, die in Längsrichtung X des Verbundbauteils länglich ausgeführt ist. Wenn sich nun wärmebedingt das untere, zweite Bauteil 12 stärker ausdehnt als das obere erste Bauteil 11, kann sich das Fügeelement 15, das als Loslager ausgebildet ist, in der Ausnehmung 16 nach links bewegen. Dadurch wird eine schwimmende Lagerung erzielt. Eine alternative Ausgestaltung des Loslagers ist in der rechten Bildhälfte von Figur 2 dargestellt, wobei in dem zweiten Bauteil 12 eine längliche Ausnehmung 17 ausgebildet ist. Bei einer thermisch bedingten Ausdehnung des zweiten Bauteils 12 kann sich dieses somit in Richtung des Pfeils L nach rechts ausdehnen, wobei das Fügeelement der Loslagerung 15 eine geringere Bewegung nach rechts durchführt. Somit kann das Fügeelement 15, das an dem sich weniger stark ausdehnenden ersten Bauteil 11 angeordnet ist, relativ zum zweiten Bauteil 12 innerhalb der Ausnehmung 17 nach links bewegen.

In einer weiteren Ausführungsform können auch alle Loslager in dem Verbundbauteil 10 strukturell gleich ausgebildet sein, gemäß dem in Figur 2 links oder rechts dargestellten Aufbau.

Figur 2 zeigt eine Schnittdarstellung entlang der Schnittlinie A-A aus Figur 3. Figur 3 zeigt eine Draufsicht auf ein Verbundbauteil 10 gemäß der ersten Ausführungsform, die in Figur 2 abgebildet ist. Wie daraus ersichtlich ist, ist das Festlager 14 in einer dritten Ausnehmung 18 ausgebildet, die eine Verschiebung in Seitenrichtung Y des Verbundbauteils 10 zulässt. Dadurch können thermisch bedingte Längenausdehnungen in X-Richtung durch die Loslager 15 und thermisch bedingte Längenausdehnung in Seitenrichtung Y durch das Festlager 14 ausgeglichen werden, so dass sowohl in Längs- wie auch in Seitenrichtung der Bauteilgruppe 10 bzw. des Verbundbauteils 10 keine Spannungen in dem ersten und dem zweiten Bauteil 11, 12 auftreten. Weitere Vorteile ergeben sich daraus, dass fertigungsbedingte und fügetechnische Toleranzen leicht ausgeglichen werden können.

In Figur 4 ist eine weitere Draufsicht auf ein erstes Bauteil 11 eines ähnlichen Verbundbauteils 10 gezeigt, zur Erläuterung möglicher Ausbildungen der Ausnehmungen 16. In Figur 4 haben die linksseitigen Loslager 15 einen zunehmend größeren Abstand zum Festlager 14. Dabei ist der Abstand des Loslagers 15" am größten, der Abstand des Loslagers 15' am zweitgrößten und der Abstand des Loslagers 15 am kleinsten. Da die Ausdehnung mit zunehmender Entfernung von dem Festlager 14 zunimmt, müssen auch die Ausnehmungen 16' bzw. 16" entsprechend vergrößert werden. Bekanntlich sind deshalb Ausnehmungen 16 der Loslager 15, die sich näher am Randbereich des Verbundbauteils 10 befinden, in Längsrichtung X des Verbundbauteils 10 größer ausgestaltet. Entsprechendes gilt auch für die Ausnehmungen 17, die in dem zweiten Bauteil 12 vorgesehen sind, wenn in Längsrichtung des Verbundbauteils 10 mehrere Loslager 15 angeordnet sind.

In Figur 5 ist eine Ausführungsform der Erfindung dargestellt. Im Folgenden sollen nur die Unterschiede zur ersten Ausführungsform erläutert werden. Wie aus Figur 5 ersichtlich ist, weist der Klebespalt, zwischen den Oberflächen 11a und 12a des ersten Bauteils und des zweiten Bauteils 12 keine kontinuierliche Dicke d auf. Der Klebespalt ist in der Seitenansicht V-förmig ausgebildet, wobei seine Dicke an der Stelle des Festlagers 14 minimal ist und zu den Stellen der Loslager 15 kontinuierlich zunimmt. Erfindungsgemäß nimmt die Dicke somit von einem mittigen Bereich zu den Randbereichen zu. Da in der Nähe der Fixierstelle, d.h. in der Nähe des Festlagers 14, die Längenausdehnung des unteren, zweiten Bauteils niedrig ist, entstehen hier niedrige Scherwinkel, so dass auch geringe Klebstoffdicken realisiert werden können. Deshalb kann hier auf Klebstoff verzichtet werden und somit eine kleinere Klebespaltdicke erzeugt werden. Mit zunehmenden Abstand von der Fixierstelle nimmt jedoch die Längenausdehnung im zweiten Bauteil zu, wodurch sich auch zunehmende Scherwinkel in der Klebeschicht ergeben. Um dieser Tatsache Rechnung zu tragen, muss die Dicke des Klebespalts dem Scherwinkel angepasst werden und dadurch zu den Randbereichen rechts- und linksseitig in Fig. 5 bzw. zu den weiter beabstandeten Bereichen von der Fixierstelle angepasst, d.h. vergrößert werden.

## Patentansprüche

1. Baugruppe umfassend mindestens zwei Bauteile (11, 12), die aus unterschiedlichen Werkstoffen ausgebildet sind, mit:
- einem ersten Bauteil (11), das einen ersten Wärmeausdehnungskoeffizient aufweist und
- einem zweiten Bauteil (12), das einen zweiten Wärmeausdehnungskoeffizient aufweist, der von dem ersten Wärmeausdehnungskoeffizient verschieden ist, wobei
- die Bauteile (11, 12) zumindest abschnittsweise über einen Klebestoff (13) miteinander in Verbindung stehen, wobei
- die Bauteile (11, 12) zusätzlich über ein Festlager (14) und ein Loslager (15) miteinander verbunden sind,
**dadurch gekennzeichnet, dass**
die Dicke (d) eines zwischen den Bauteilen (11, 12) vorgesehenen Klebespalts von dem Festlager (14) zu dem Loslager (15) zunimmt.

2. Baugruppe nach Patentanspruch 1, **dadurch gekennzeichnet, dass** das Festlager (14) in einer Längsrichtung (X) der Bauteilgruppe im Wesentlichen mittig angeordnet ist

3. Baugruppe nach Anspruch 1 oder 2,
**dadurch gekennzeichnet, dass**
das Festlager (14) und/oder das Loslager (15) als Fügeelement, insbesondere als Niet, Gewindebolzen und/oder Kunststoffclips ausgebildet ist.

4. Verfahren zum Verbinden von Bauteilen mit unterschiedlichen Wärmeausdehnungskoeffizienten, mit den Schritten:
- Verbinden zweier Bauteile (11, 12) mit einem Klebstoff (13),
- Anordnung eines die beiden Bauteile (11, 12) verbindenden Festlagers (14),
- Anordnung mindestens eines die beiden Bauteile (11, 12) verbindenden Loslagers (15) und
- Aushärtung des Klebstoffs (13),
**dadurch gekennzeichnet, dass**
ein Klebespalt mit einer Dicke (d), die von dem Festlager (14) zu dem Loslager (15) zunimmt, erzeugt wird.

5. Verfahren nach Anspruch 4, **dadurch gekennzeichnet, dass**
- die Anordnung des Festlagers (14) im Wesentlichen mittig in einer Längsrichtung (X) der Bauteilgruppe erfolgt.

6. Verfahren nach Anspruch 4 oder 5, **dadurch gekennzeichnet, dass**
die Bauteile (11, 12) zuerst mittels Festlager (14) und Loslager (15) miteinander verbunden werden und anschließend die Aushärtung des Klebstoffs (13) durch Beaufschlagung mit Wärme erfolgt.

## Claims

1. An assembly comprising at least two components (11, 12) which are formed from different materials, having:
- a first component (11) which has a first coefficient of thermal expansion, and
- a second component (12) which has a second coefficient of thermal expansion which is different from the first coefficient of thermal expansion, wherein
- the components (11, 12) are connected together at least in portions by means of an adhesive (13), wherein
- the components (11, 12) are additionally connected together by means of a fixed bearing (14) and a movable bearing (15),
**characterised in that**
the thickness (d) of an adhesive gap provided between the components (11, 12) increases from the fixed bearing (14) to the movable bearing (15).

2. An assembly according to Claim 1, **characterised in that** the fixed bearing (14) is arranged substantially centrally in a longitudinal direction (X) of the component group.

3. An assembly according to Claim 1 or Claim 2,
**characterised in that**
the fixed bearing (14) and/or the movable bearing (15) is designed as a joining element, especially as a rivet, threaded bore and/or plastics-material clip.

4. A method for connecting components with different coefficients of thermal expansion, having the steps:
- connecting two components (11, 12) with an adhesive (13),
- arranging a fixed bearing (14) which connects the two components (11, 12),
- arranging at least one movable bearing (15) which connects the two components (11, 12), and
- curing the adhesive (13),
**characterised in that**
an adhesive gap with a thickness (d) which increases from the fixed bearing (14) to the movable bearing (15) is produced.

5. A method according to Claim 4, **characterised in that**
- the fixed bearing (14) is arranged substantially centrally in a longitudinal direction (X) of the component group.

6. A method according to Claim 4 or Claim 5, **characterised in that**
the components (11, 12) are first connected together by means of the fixed bearing (14) and movable bearing (15) and then the curing of the adhesive (13) takes place by exposure to heat.

## Revendications

1. Ensemble constitué d'au moins deux pièces (11, 12) réalisées en des matériaux différents comprenant :
- une première pièce (11) qui a un premier coefficient de dilatation thermique, et
- une seconde pièce (12) qui a un second coefficient de dilatation thermique qui est différent du premier coefficient de dilatation thermique,
- les pièces (11, 12) étant liées au moins par segment par une colle (13),
- les pièces (11, 12) étant en outre reliées par l'intermédiaire d'un palier fixe (14) et d'un palier libre (15),
**caractérisé en ce que**
l'épaisseur (d) de l'intervalle de colle prévu entre les pièces (11, 12) augmente du palier fixe (14) au palier libre (15).

2. Ensemble conforme à la revendication 1,
**caractérisé en ce que**
le palier fixe (14) est positionné essentiellement dans une position centrale dans la direction longitudinale (X) de l'ensemble de pièces.

3. Ensemble conforme à la revendication 1 ou 2,
**caractérisé en ce que**
le palier fixe (14) et/ou le palier (15) est(sont) réalisé(s) sous la forme d'éléments d'assemblage, en particulier de rivets, de goujons filetés et/ou de clips en matière plastique.

4. Procédé de liaison de pièces ayant des coefficients de dilatation thermique différents comprenant des étapes consistant à :
- lier deux pièces (11, 12) avec une colle (13),
- positionner un palier fixe (14) liant les deux pièces (11, 12),
- positionner au moins un palier libre (15) liant les deux pièces (11, 12), et
- durcir la colle (13),
**caractérisé en ce qu'**
ont obtient un intervalle de colle ayant une épaisseur (d) qui augmente du palier fixe (14) vers le palier libre (15).

5. Procédé conforme à la revendication 4,
**caractérisé en ce que**
le positionnement du palier fixe (14) est effectué essentiellement au centre de l'ensemble dans la direction longitudinale (X).

6. Procédé conforme à la revendication 4 ou 5,
**caractérisé en ce que**
les pièces (11, 12) sont tout d'abord liées au moyen du palier fixe (14) et du palier libre (15), puis le durcissement de la colle (13) est effectué sous l'action de chaleur.
